# EUROPEAN PATENT SPECIFICATION

(11) **EP 4 198 406 B1**
(45) Date of publication and mention of the grant of the patent: **04.11.2026**
(21) Application number: 22207191.2
(22) Date of filing: 14.11.2022
(51) Int. Cl.: F24D 17/00, F24H 15/219, F24H 1/10, F24D 19/10, F24H 15/31, F24H 15/315, F24H 15/34, F24H 15/238

(54) **FLUID HEATING APPARATUS**
FLUIDHEIZVORRICHTUNG
APPAREIL DE CHAUFFAGE DE FLUIDE

(30) Priority: 13.12.2021 KR 20210178059
(43) Date of publication of application: 21.06.2023
(73) Proprietor: Kyungdong Navien Co., Ltd., Pyeongtaek-si, Gyeonggi-do 17704 (KR)
(72) Inventor: PARK, Jun Kyu, 08217 Seoul (KR); AHN, Sung Jun, 08217 Seoul (KR)
(74) Representative: Meissner Bolte Partnerschaft mbB

(56) References cited:
- KR-A- 20170 128 850
- US-A1- 2010 326 646
- US-A1- 2016 186 415
- US-A1- 2020 408 442
- US-B2- 10 648 680

## Description

### CROSS-REFERENCE TO RELATED APPLICATION

This application claims the benefit of priority to Korean Patent Application No. 10-2021-0178059, filed in the Korean Intellectual Property Office on December 13, 2021.

### TECHNICAL FIELD

Embodiments disclosed herein relate to a fluid heating apparatus.

### BACKGROUND

In general, a hot water supply device may be classified into a method in which a storage-type heat exchanger is applied and a method in which a water tube-type instantaneous heat exchanger is applied. This hot water supply device has the following disadvantages. First, in the case of the hot water supply device to which the storage-type heat exchanger is applied, since an internal irrigation capacity needs to be heated, a long time is consumed to obtain hot water, a recovery time is long, and it is difficult to continuously supply hot water having a constant temperature. Further, there is a disadvantage in that the heat exchanger should be very large to obtain a large amount of hot water. Meanwhile, the hot water supply device to which the water tube-type instantaneous heat exchanger is applied also has a problem in that it is difficult to apply the hot water supply device to a commercial site due to flow distribution and high pressure drop in a water tube.

To solve these disadvantages, in the case of the commercial site, in general, the hot water supply device is connected to an external hot water storage tank and stores a large amount of water, and a user uses water in the hot water tank. However, in this system, additional facilities such as a hot water tank and a pipe are required, the water in the hot water tank should be always heated, and accordingly, energy loss occurs.

Meanwhile, to solve this problem, hot water supply devices to which a fire tube-type heat exchanger is applied have been introduced. However, in the case of the hot water supply device to which the fire tube-type heat exchanger is applied, cracks may occur inside the heat exchanger due to local overheating, and limescale may be piled inside the heat exchanger due to calcium settling caused by a reduced flow rate.

In more detail, the fire tube-type heat exchanger is configured such that an upper pipe plate (or a tube sheet) to which a fire tube is fixed is closest to a burner that is a heat source. The upper pipe plate is a portion in which direct heat exchange through a flame is performed. Accordingly, since cracks may occur in the upper pipe plate due to local boiling and heat concentration, a diaphragm is provided below the upper pipe plate, and thus a large amount of fluid may be heat-exchanged while in direct contact with the upper pipe plate.

Due to characteristics of the heat exchanger, even when the heat exchanger is used as a water heater, a large amount of fluid should be concentrated on the upper pipe plate. However, due to characteristics of the water heater, in the case of a product in which a change in the amount of fluid is large, this issue needs to be reviewed. In particular, even when a small amount of hot water is used, a method that may cope with the problem should be devised.

As an example, when a small amount of hot water is used, the flow rate through the diaphragm is small, the flow of water due to inertial force is not directed to the upper pipe plate, and thus local heating of the upper pipe plate cannot be avoided. For example, when a small amount of hot water is used, lime is precipitated from fluid near the upper pipe plate that is directly heated by the burner, and the precipitated lime is attached to the upper pipe plate and the fire tube. In this case, since the lime serves as a resistance that hinders heat exchange between a high-temperature gas and the fluid, the local heating is intensified, and thus this increases a possibility of occurrence of cracks.

US 2020/408442 A1 discloses a fluid heating apparatus comprising:
a burner;
a heat exchanger;
a first flow rate sensor configured to detect a flow rate of a fluid supplied
to the heat exchanger;
a temperature sensor configured to detect a temperature of a fluid discharged from the heat exchanger; and
a controller configured to control a first pump provided in an internal circulation
flow path on the basis of the flow rate detected by the first flow rate sensor to manage the flow rate of the fluid supplied to the heat exchanger and configured to control an operation of the burner on the basis of the temperature detected by the temperature sensor,
wherein the controller is adapted to control the first pump to increase the flow rate of the fluid supplied to the heat exchanger when the flow rate detected by the first flow rate sensor is less than or equal to a reference flow rate, and
a first pump provided in an internal circulation flow path.
This document also discloses to start the pump when the faucet is closed (which is detected by the flow sensor, see paragraph 8) and then the system enters immediate hot water supply operation mode in which a circulation pump is activated while a hot water supply faucet is closed.

Further relevant prior art is constituted by US 2010/326646 A1, KR20170128850A, US 2016/186415 A1 and US 10648680 G2.

### SUMMARY

The present invention is defined as a fluid heating apparatus according to claim 1. Advantagous embodiments of the invention are subject of the dependent claims.

The present invention has been made to solve the above-mentioned problems occurring in the prior art while advantages achieved by the prior art are maintained intact.

An aspect of embodiments disclosed herein provides a fluid heating apparatus in which hot water may be instantaneously used without installing an external hot water tank, and heat loss, an installation space, and installation cost may be reduced.

Further, another aspect of embodiments disclosed herein provides a fluid heating apparatus in which, since a circulation pump is applied even when a small flow rate is used, a minimum flow rate to protect a heat exchanger may be secured, and thus internal and external preheating functions may be used, and a fluid having a constant temperature may be supplied to a user at all times.

The technical aspects of the embodiments disclosed herein are not limited to the technical aspects described above, and those skilled in the art will clearly understand other technical aspects not described from the following descriptions.

In an embodiment, the controller may increase an amount of heat of the burner when the temperature detected by the temperature sensor is less than or equal to a set temperature.

In an embodiment, the fluid heating apparatus may further include a flow rate adjustment valve that adjusts the flow rate of the fluid supplied from the outside to the heat exchanger.

In an embodiment, the fluid heating apparatus may further include a mixing valve that mixes the fluid supplied from the outside to adjust the temperature of the fluid discharged from the heat exchanger.

In an embodiment, the controller may control opening or closing of the mixing valve so that the temperature of the fluid discharged from the heat exchanger corresponds to a set temperature.

In an embodiment, the controller may control the first pump when the fluid flowing through the internal circulation flow path satisfies a preset preheating condition.

In an embodiment, the preset preheating condition may include a case in which the temperature detected by the temperature sensor is less than or equal to a preheating reference temperature.

The second flow rate sensor detects the flow rate of circulation water flowing through the internal circulation flow path.

In an embodiment, the controller may determine that the first pump is abnormal when the first pump is operated but the flow rate detected by the second flow rate sensor is less than a threshold flow rate.

In an embodiment, the fluid heating apparatus may further include a second pump that is provided outside the fluid heating apparatus and recirculates, to the fluid heating apparatus, the fluid delivered from the fluid heating apparatus.

In an embodiment, the controller may control the burner to perform a combustion operation when a temperature of a pipe connected between the fluid heating apparatus and the second pump is less than or equal to a recirculation reference temperature.

### BRIEF DESCRIPTION OF THE DRAWINGS

The above and other objects, features and advantages of the present invention will be more apparent from the following detailed description taken in conjunction with the accompanying drawings:
FIG. 1 is a view illustrating a configuration of a fluid heating apparatus according to an embodiment of the present invention;
FIG. 2 is a view illustrating a heat exchanger of the fluid heating apparatus according to an embodiment of the present invention;
FIG. 3 is a flowchart illustrating a method of controlling a fluid heating apparatus according to an embodiment of the present invention;
FIG. 4 is a flowchart illustrating a method of controlling a fluid heating apparatus according to another embodiment of the present invention;
FIG. 5 is a flowchart illustrating an internal preheating operation in the method of controlling a fluid heating apparatus according to an embodiment of the present invention;
FIG. 6 is a flowchart illustrating an external preheating operation in the method of controlling a fluid heating apparatus according to an embodiment of the present invention; and
FIG. 7 is a block diagram illustrating a hardware configuration implementing the method of controlling a fluid heating apparatus according to an embodiment of the present invention.

### DETAILED DESCRIPTION

Hereinafter, various embodiments disclosed herein will be described in detail with reference to the accompanying drawings. In the present invention, the same reference numerals are used for the same components in the drawings, and duplicated descriptions of the same components will be omitted.

In various embodiments disclosed herein, specific structural or functional descriptions are merely exemplified to describe the embodiments, various embodiments disclosed herein may be implemented in various forms, and the present invention should not be construed as being limited to the embodiments described herein.

Expressions such as "first", "second", "the first", and "the second" used in various embodiments may modify various components regardless of an order and/or importance and do not limit the corresponding components. For example, while not deviating from the scope of the embodiments disclosed herein, a first element may be named a second element, and similarly, the second element may be named the first element.

Terms used herein are merely used to describe specific embodiments and may not be intended to limit the scope of other embodiments. Singular expressions may include plural expressions unless clearly otherwise indicated in the context.

All terms used herein including technical or scientific terms have the same meanings as those commonly understood by those skilled in the art of the embodiments disclosed herein. Terms defined in a generally-used dictionary may be interpreted to have the same or similar meanings as the meanings in the context of the related art and are not interpreted as ideal or excessively formal meanings unless explicitly defined in the present invention. In some cases, even terms defined in the present invention may not be interpreted to exclude embodiments of the present invention.

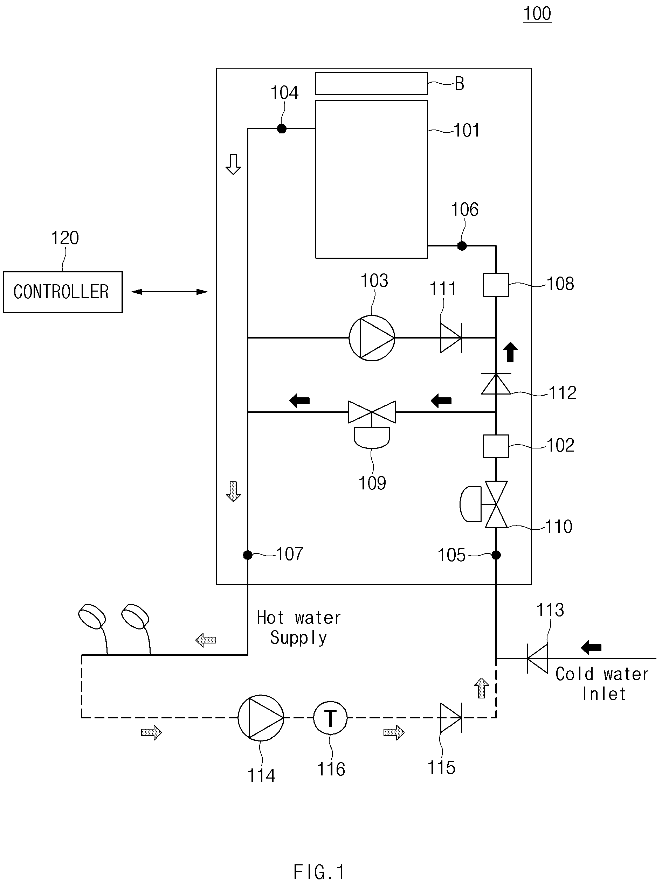

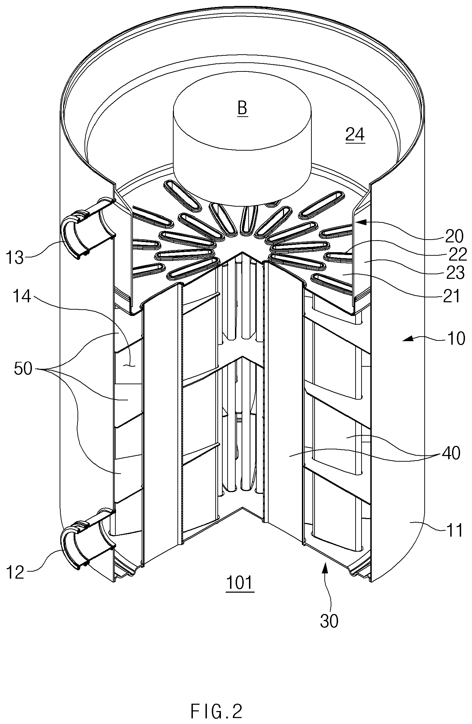

FIG. 1 is a view illustrating a configuration of a fluid heating apparatus according to an embodiment of the present invention. FIG. 2 is a view illustrating a heat exchanger of the fluid heating apparatus according to an embodiment of the present invention.

First, referring to FIG. 1, a fluid heating apparatus 100 according to an embodiment of the present invention may include a burner B, a heat exchanger 101, a first flow rate sensor 102, a first pump (internal pump) 103, a first hot water temperature sensor 104, a first direct water temperature sensor 105, a second direct water temperature sensor 106, a second hot water temperature sensor 107, a second flow rate sensor 108, a mixing valve 109, a flow rate adjustment valve 110, a first check valve 111, a second check valve 112, a direct water check valve 113, a second pump (recirculation pump) 114, a third check valve 115, a thermostat 116, and a controller 120. Meanwhile, in the following description, a fluid that is supplied to the fluid heating apparatus 100 or circulates inside the fluid heating apparatus 100 is water. However, the fluid used in the fluid heating apparatus 100 disclosed herein is not limited to the water, and various types of fluids may be used as the fluid.

The heat exchanger 101 may supply heat generated by the burner B of the fluid heating apparatus 100 to the fluid. For example, the heat exchanger 101 may heat supplied direct water to supply hot water corresponding to a preset temperature to a user.

A structure of the heat exchanger 101 will be described with reference to FIG. 2.

Referring to FIG. 2, the heat exchanger 101 may include an outer case 10, a combustion chamber 20, a lower pipe plate 30, and a lead pipe 40.

The outer case 10 is a body of the heat exchanger 101, which is formed in a cylindrical shape, and components constituting the heat exchanger 101 are accommodated in a cylindrical inner space 24.

Openings are formed at both ends of the outer case 10, a hollow 14 communicating with the openings at both ends is provided inside the outer case 10, an inlet 12 through which the direct water is introduced into the hollow 14 is provided at a lower end of the outer case 10, and an outlet 13 through which heated hot water is discharged from the hollow 14 is provided at an upper end of the outer case 10. The direct water introduced into the inlet 12 flows along the hollow 14 and is discharged through the outlet 13. While flowing in the hollow 14, the direct water is heated by receiving thermal energy from the high-temperature lead pipe 40 and the combustion chamber 20.

The outer case 10 may include an outer case extension 11 that extends vertically upward and downward and serves as a wall of the outer case 10 and is formed in a cylindrical shape in which an upper end and a lower end of the outer case extension 11 are opened.

The opening of the outer case 10 at the upper end is covered with the combustion chamber 20. Here, the wording "the combustion chamber 20 covers the opening" may mean that a rim of the opening located at the upper end of the outer case 10 is completely covered from the outside as illustrated in the drawings. However, covering the opening may be expressed even in a case in which, while the rim of the opening protrudes outward, the combustion chamber 20 is inserted into the opening of the outer case 10 and is coupled to an inner circumferential surface of the hollow 14 of the outer case 10, and thus, the combustion chamber 20 is coupled to the hollow 14 such that the hollow 14 is blocked from the outside.

The combustion chamber 20 is a cylindrical component that covers the opening of the outer case 10 at the upper end and is a component in which the burner B that generates combustion gas G to transfer heat to the direct water is disposed in the inner space 24 of the combustion chamber 20. The combustion chamber 20 is an internal container for positioning the burner B that generates the combustion gas G through heating inside the hollow 14 of the outer case 10 and provides the inner space 24 extending from the upper end toward the lower end of the outer case 10. The cylindrical combustion chamber 20 extends from upper end of the outer case 10 toward the lower end of the outer case 10 but does not reach the lower end of the outer case 10.

The burner B may be disposed in the inner space 24 of the combustion chamber 20, and the burner B may receive fuel and air to cause a combustion reaction so as to generate a heat source. For example, the burner B may heat the combustion gas G to transfer the heat to the direct water. Further, the burner B may heat gas accommodated in the combustion chamber 20 to generate the combustion gas G. The combustion gas G generated by the burner B may be discharged from the combustion chamber 20 through the lead pipe 40 to the outside. In this process, the combustion gas G passing through the lead pipe 40 may heat the direct water passing through the hollow 14.

A lower end of the combustion chamber 20 is covered with an upper pipe plate 21. An upper pipe plate through-hole 22 through which the lead pipe 40, which will be described below, may pass may be formed in the upper pipe plate 21. The upper pipe plate 21 may be separated from the combustion chamber 20 or the combustion chamber 20 and the upper pipe plate 21 may be formed integrally.

An upper end of the combustion chamber 20 may have a diameter corresponding to the upper end of the outer case 10 and may be coupled to the upper end of the outer case 10 to close the upper end of the outer case 10 so as to form the sealed hollow 14 of the outer case 10. However, the diameter of a combustion chamber extension 23 extending from the upper end of the outer case 10 toward the lower end of the outer case 10 may be formed to be smaller than the diameter of the outer case 10. Thus, the combustion chamber 20 may have a tapered shape while extending from the combustion chamber extension 23 to the upper end of the combustion chamber 20.

The diameter of the combustion chamber extension 23 is formed to be smaller than the diameter of the outer case 10, and thus a flow space may be formed between an inner circumferential surface of the outer case 10 and an outer circumferential surface of the combustion chamber 20. The direct water may flow from the hollow 14 through the flow space. The outlet 13 of the outer case 10, which is formed at the upper end of the outer case 10, may communicate with the flow space. Thus, the direct water or the heated water flowing through the flow space may be discharged through the outlet 13 of the outer case 10. The direct water flowing in the flow space finally receives heat from the combustion chamber 20 heated by the heat source and is discharged through the outlet 13 formed in the outer case 10.

A plurality of lead pipes 40 are tubular components arranged between the lower pipe plate 30 and the combustion chamber 20 and communicating with the inner space 24 of the combustion chamber 20 and a lower side of the lower pipe plate 30. Thus, the plurality of lead pipes 40 guide the combustion gas G generated by the heat source from the inner space 24 of the combustion chamber 20 via the hollow 14 of the outer case 10 toward the lower side of the lower pipe plate 30. According to an embodiment, the lead pipes 40 extend vertically upward and downward. Thus, the heated combustion gas G moves downward through the lead pipes 40. In a process of moving the combustion gas G, heat exchange between heating water moving upward and the combustion gas G moving downward through the hollow 14 of the outer case 10 is performed through the lead pipes 40.

The plurality of lead pipes 40 are configured and may be arranged radially from a center of a circular cross section of the outer case 10 and the combustion chamber 20. The center of the circular cross section may be the same as a center of a disk-shaped diaphragm 50 which will be described below. Thus, the lead pipes 40 may be arranged at regular intervals along one circumference. However, the lead pipes 40 may be arranged in two stages by being arranged at regular intervals along two circumferences having different diameters, and the arrangement is not limited thereto.

The heat exchanger 101 may further include the diaphragm 50. The diaphragm 50 is disposed in the hollow 14 of the outer case 10, which is formed inside the outer case 10. The diaphragm 50 is component formed in a disk shape and is disposed to cross vertically upward and downward between the lower pipe plate 30 and the combustion chamber 20. In FIG. 2, the diaphragm 50 is arranged to be perpendicular to the vertically upward and downward directions, but the arranged direction is not limited thereto.

A through-hole is formed at a position corresponding to a position of the lead pipe 40 in the diaphragm 50 and the lead pipe 40 may pass through the through-hole. As the diaphragm 50 divides the hollow 14 into a plurality of regions, a flow path through which the heating water flowing inside the hollow 14 moves may be formed. As illustrated, a plurality of diaphragms 50 are arranged, and thus the flow path of the heating water may be formed more complicatedly.

Referring back to FIG. 1, the first flow rate sensor 102 may detect a flow rate of the direct water supplied to the fluid heating apparatus 100 and/or the hot water transferred from an external circulation flow path. According to an embodiment, the first flow rate sensor 102 may detect the flow rate of the direct water supplied to the heat exchanger 101. For example, as illustrated in FIG. 1, the first flow rate sensor 102 may be provided between the first pump 103 and a direct water introduction line (a cold water inlet) and detect the flow rate of the direct water introduced into the fluid heating apparatus 100.

The first pump 103 may circulate the direct water (fluid) supplied into the fluid heating apparatus 100 and control the flow rate and the flow velocity of a circulation water circulating through the inside and the outside. The first pump 103 may be provided in an internal circulation flow path of the fluid heating apparatus 100. According to an embodiment, the internal circulation flow path may be a flow path formed along the heat exchanger 101, the first hot water temperature sensor 104, the first pump 103, the second flow rate sensor 108, and the second direct water temperature sensor 106 and may be defined as a flow path through which the hot water supplied to and discharged from the heat exchanger 101 circulates to be supplied to the heat exchanger 101 again.

In general, in the heat exchanger 101 of the fluid heating apparatus 100, when the flow rate of the hot water is too small or the temperature of the hot water is too high, the temperature increases too high, and thus overheating occurs. Further, cracks may occur in a portion of the upper pipe plate 21 or lime is piled in a portion in which the upper pipe plate 21 and the lead pipe 40 are in contact with each other.

In this case, the flow rate and/or the flow velocity of the circulation water circulating inside the fluid heating apparatus 100 increases through the first pump 103, and thus lime and cracks may be prevented from occurring in the upper pipe plate 21 and the lead pipe 40 of the heat exchanger 101, and the heat transferred to the upper pipe plate 21 may be effectively transferred to the fluid, thereby improving heat exchange efficiency.

The first hot water temperature sensor 104 may measure the temperature of the hot water discharged from the heat exchanger 101. Further, the first direct water temperature sensor 105 may measure the temperature of the direct water directly introduced through a pipe. Further, the second direct water temperature sensor 106 may measure the temperature of the direct water introduced into the heat exchanger 101. Further, the second hot water temperature sensor 107 may measure the temperature of the hot water (for example, water obtained by mixing the hot water supplied from the heat exchanger 101 and the direct water introduced through the mixing valve 109) supplied to a hot water supply line (or a hot water supply).

The second flow rate sensor 108 may be provided between the first pump 103 and the heat exchanger 101 and detect the flow rate of the direct water and/or the circulation water. In particular, the second flow rate sensor 108 may be used to determine whether the first pump 103 is abnormal when the controller 120 operates the first pump 103 but the first pump 103 does not operate. For example, the controller 120 may determine that the first pump 103 is abnormal when the first pump 103 is operated but the flow rate detected by the second flow rate sensor 108 is less than a threshold flow rate.

The mixing valve 109 may adjust the temperature of the hot water supplied to the hot water supply line by mixing the direct water supplied from the outside with the hot water discharged from the heat exchanger 101. For example, referring to FIG. 1, the mixing valve 109 may set the temperature of the hot water supplied to the hot water supply line to a set temperature by mixing the direct water introduced into the fluid heating apparatus 100 with the hot water discharged from the heat exchanger 101. The mixing valve 109 may operate under control of the controller 120.

The flow rate adjustment valve 110 may adjust the flow rate of the direct water supplied into the fluid heating apparatus 100. Further, according to an embodiment, the flow rate adjustment valve 110 may adjust the flow rate of the direct water supplied to the heat exchanger 101. For example, when the flow rate detected by the first flow rate sensor 102 is a maximum flow rate or more, the controller 120 may adjust the flow rate by controlling the flow rate adjustment valve 110 to be opened or closed to limit the flow rate of the fluid heating apparatus 100. Thus, the fluid heating apparatus 100 according to an embodiment of the present invention may limit the flow rate to satisfy a set temperature of the hot water when the flow rate is greater than a limit flow rate that may satisfy the set temperature.

The first check valve 111 and the second check valve 112 may control the direct water or the circulation water of the fluid heating apparatus 100 to flow in a predetermined direction. For example, the first check valve 111 may control the circulation water circulating through the first pump 103 to flow in a direction toward the heat exchanger 101. Further, the second check valve 112 may control the direct water introduced into the fluid heating apparatus 100 to flow in a direction from the first flow rate sensor 102 toward the second flow rate sensor 108. Further, the direct water check valve 113 may control the direct water introduced through the direct water introduction line to flow in a direction toward the fluid heating apparatus 100.

The second pump (recirculation pump) 114 may be provided outside the fluid heating apparatus 100 and recirculate, to the fluid heating apparatus 100, the hot water delivered from the fluid heating apparatus 100. In this case, when the temperature of the circulation water in a pipe connected between the fluid heating apparatus 100 and the second pump 114 is less than or equal to a recirculation reference temperature, the controller 120 may operate the second pump 114 and control the burner B to perform a combustion operation. According to an embodiment, the controller 120 may operate the first pump 103 together with the second pump 114 to recirculate, to the fluid heating apparatus 100, the hot water delivered from the fluid heating apparatus 100.

The third check valve 115 may control the fluid supplied from the second pump 114 to flow into the fluid heating apparatus 100 without reverse flow.

The thermostat 116 may control the operation of the second pump 114 by turning on/off a contact point. For example, when the temperature of the circulation water in a recirculation pipe connected between the fluid heating apparatus 100 and the second pump 114 is lower than the recirculation reference temperature, the thermostat 116 may open the contact point to operate the second pump 114.

The controller 120 may control the flow rate of the direct water and/or the circulation water supplied to the heat exchanger 101 through the first pump 103 provided inside the fluid heating apparatus 100 on the basis of the flow rate detected by the first flow rate sensor 102 or the second flow rate sensor 108.

In detail, when the flow rate detected by the first flow rate sensor 102 is less than a reference flow rate, the controller 120 may control the first pump 103 to increase the flow rate of the circulation water supplied to the heat exchanger 101.

Further, when the set temperature of the fluid heating apparatus 100 is greater than or equal to a reference temperature, the controller 120 may control the first pump 103 to increase the flow rate of the direct water and/or the circulation water passing through the heat exchanger 101. According to an embodiment, the reference temperature may be defined as a critical temperature at which lime is formed in the heat exchanger 101. In this case, the controller 120 may control the flow rate according to the flow rate and/or the temperature of an internal fluid of the fluid heating apparatus 100 so as to prevent lime from being generated inside the heat exchanger 101.

When the flow rate starts to be detected by the first flow rate sensor 102, the controller 120 may determine that a user uses the hot water and thus perform a hot water operation. Meanwhile, when the flow rate is not detected by the first flow rate sensor 102, the controller 120 may determine that the use of the hot water is stopped and thus control the first pump 103 to be stopped. Further, the controller 120 may control the opening and closing of the mixing valve 109 and the flow rate adjustment valve 110 so that the temperature of the water supplied from the fluid heating apparatus 100 is adjusted to a set temperature.

The controller 120 may control the operation of the burner B on the basis of the temperature of the hot water, which is detected by the first hot water temperature sensor 104. For example, the controller 120 may increase the amount of heat of the burner when the temperature of the hot water detected by the first hot water temperature sensor 104 is less than or equal to a set temperature. In one aspect, this control operation of the controller 120 may be understood as a feedback control operation based on the temperature of the hot water detected by the first hot water temperature sensor 104.

Further, when the fluid circulating in the internal circulation flow path of the fluid heating apparatus 100 satisfies a preset preheating condition, the controller 120 may control the first pump 103. For example, the preset preheating condition may include a case in which the temperature of the hot water detected by the first hot water temperature sensor 104 is less than or equal to a preheating reference temperature.

In general, when the hot water is not used in the fluid heating apparatus 100 for a long time, the temperature inside the fluid heating apparatus 100 may be decreased, and in this state, when the hot water is used, the hot water having a temperature lower than a set temperature may be supplied. To solve this problem, the fluid heating apparatus 100 according to an embodiment disclosed herein may perform a preheating operation when a set preheating condition is satisfied and maintain the temperature of the hot water inside the fluid heating apparatus 100 at a constant temperature.

Further, the controller 120 may determine whether the first pump 103 is abnormal by comparing a temperature difference of the fluid measured by a plurality of temperature sensors with a reference temperature difference. For example, when the second flow rate sensor 108 is not installed, when a difference between temperatures measured by the first direct water temperature sensor 105 and the second direct water temperature sensor 106 is less than a reference temperature difference or temperatures measured by the first hot water temperature sensor 104 and the second direct water temperature sensor 106 exceed a reference temperature range, the controller 120 may determine that the first pump 103 is abnormal.

In this way, when a direct water pipe and a hot water pipe are directly connected to the fluid heating apparatus 100 and the hot water pipe needs to be recirculated, the fluid heating apparatus 100 according to an embodiment disclosed herein may additionally connect a recirculation pump (for example, the second pump 114) to the outside. Further, the fluid heating apparatus 100 may include the flow rate sensor, the temperature sensor, the flow rate adjustment valve, and the mixing valve for hot water use determination and hot water temperature control and include an internal pump (for example, the first pump 103) therein to protect the heat exchanger.

In this way, in the fluid heating apparatus 100 according to an embodiment disclosed herein, the hot water may be instantaneously used without installing an external hot water tank, and heat loss, an installation space, and installation cost may be reduced.

Further, the fluid heating apparatus 100 according to an embodiment disclosed herein may protect the heat exchanger 101 even when a small flow rate is used and thus may have improved durability, use the internal preheating function, and supply the hot water having a constant temperature to a user.

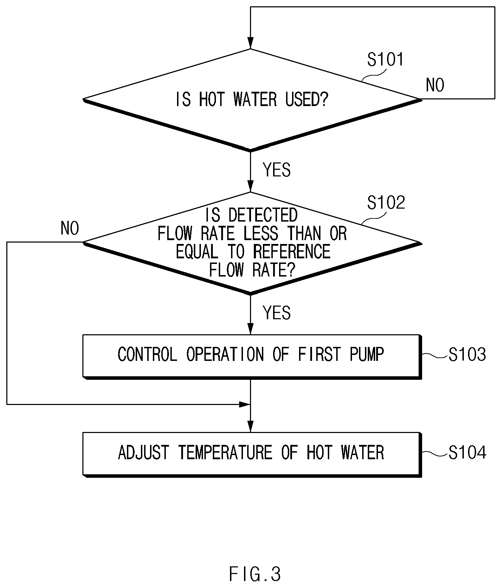

FIG. 3 is a flowchart illustrating a method of controlling a fluid heating apparatus according to an embodiment of the present invention.

Referring to FIG. 3, in a method of controlling the fluid heating apparatus 100 according to an embodiment of the present invention, first, it may be determined whether the hot water is used (S101). Further, when a user starts to use the hot water, it is determined whether the flow rate detected by the first flow rate sensor 102 of the fluid heating apparatus 100 is less than or equal to a reference flow rate (S102).

When the detected flow rate is less than or equal to the reference flow rate (Yes), it is possible to control the internal pump (the first pump 103) of the fluid heating apparatus 100 to be operated (S103). Further, the controller 120 may control the opening and closing of the mixing valve 109 to adjust the temperature of the hot water discharged from the heat exchanger 101 (S104). Meanwhile, even when the detected flow rate exceeds a reference flow rate (No), the first pump is controlled to be turned off.

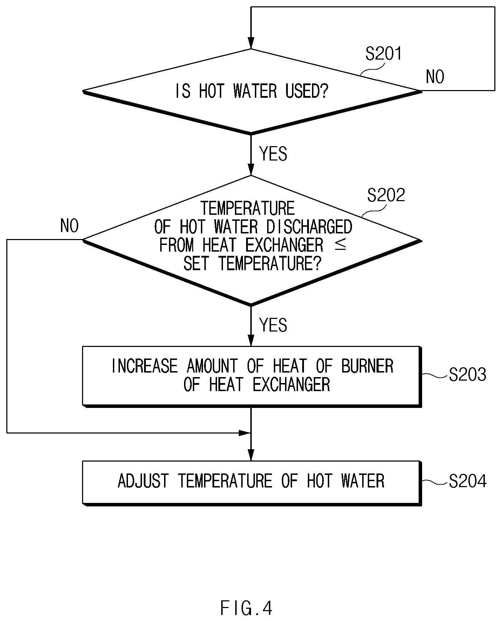

FIG. 4 is a flowchart illustrating a method of controlling a fluid heating apparatus according to another embodiment of the present invention.

Referring to FIG. 4, in a method of controlling the fluid heating apparatus 100 according to another embodiment of the present invention, first, it may be determined whether the hot water is used (S201). Further, when a user starts to use the hot water, it is determined whether the temperature detected by the first hot water temperature sensor 104 of the fluid heating apparatus 100 is less than or equal to a set temperature (S202).

When the detected temperature is less than or equal to the set temperature (Yes), the controller 120 may increase the amount of heat of the burner (S203). Further, the controller 120 may control the opening and closing of the mixing valve 109 to adjust the temperature of the hot water discharged from the heat exchanger 101 (S204). Meanwhile, even when the detected temperature exceeds the set temperature (No), operation S204 may be performed.

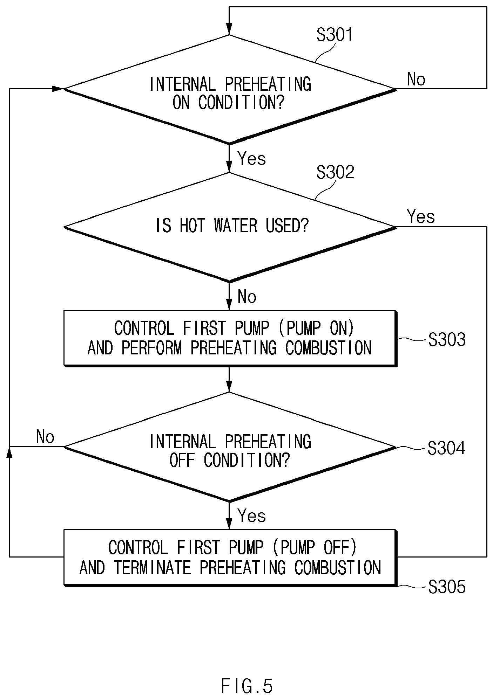

FIG. 5 is a flowchart illustrating a preheating operation in the method of controlling a fluid heating apparatus according to an embodiment of the present invention.

Referring to FIG. 5, in a method of controlling the fluid heating apparatus 100 according to an embodiment of the present invention, first, it is determined whether the internal preheating condition is satisfied during the preheating operation (S301). For example, the internal preheating condition may be determined according to a preset temperature and/or time.

Further, it is determined whether the hot water is used (S302), and when the hot water is not used (NO), the internal pump (the first pump 103) is operated, and preheating combustion is started through the burner B (S303). Meanwhile, when the hot water is used (YES), the process proceeds to operation S305 to turn off the internal pump (the first pump 103).

Next, when the internal preheating condition is released or a separately set internal preheating release condition is satisfied (YES), the operation of the internal pump (the first pump 103) is stopped and the preheating combustion is stopped (S305). On the other hand, when the internal preheating release condition is not satisfied (NO), the process returns back to operation S301.

In this way, in the method of controlling the fluid heating apparatus 100 according to an embodiment disclosed herein, the hot water may be instantaneously used without installing an external hot water tank, and heat loss, an installation space, and installation cost may be reduced.

Further, in the method of controlling the fluid heating apparatus 100 according to an embodiment disclosed herein, the heat exchanger 101 may be protected even when the small flow rate is used, durability may be improved, the internal preheating function may be used, and the hot water having a constant temperature may be supplied to a user.

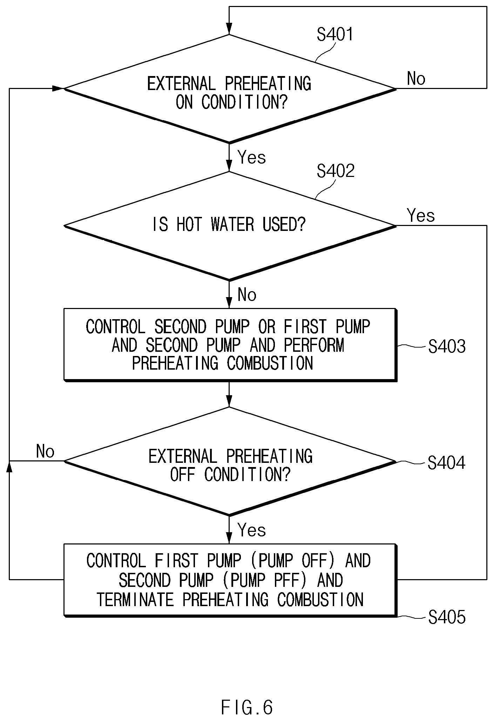

FIG. 6 is a flowchart illustrating an external preheating operation in the method of controlling a fluid heating apparatus according to an embodiment of the present invention.

Referring to FIG. 6, in the method of controlling the fluid heating apparatus 100 according to an embodiment of the present invention, first, it is determined whether the external preheating condition is satisfied during the preheating operation (S401). For example, when the temperature of the circulation water detected by the thermostat 116 is less than or equal to the recirculation reference temperature, the controller 120 of the fluid heating apparatus 100 may determine that the external preheating condition is satisfied.

Further, it is determined whether the hot water is used (S402), and when the hot water is not used (NO), an external pump (the second pump 114) is operated or the external pump and the internal pump (the first pump 103) is operated and the preheating combustion is started through the burner B (S403). That is, according to various embodiments, the controller 120 may operate the first pump 103 together with the second pump 114 to recirculate, to the fluid heating apparatus 100, the hot water delivered from the fluid heating apparatus 100. Meanwhile, when the hot water is used (YES), the process proceeds to operation S405 to turn off the external pump and/or the internal pump (the first pump 103).

Next, when the external preheating condition is released or a separately set external preheating release condition is satisfied (YES), the operation of the external pump (the second pump 114) and/or the internal pump (the first pump 103) is stopped and the preheating combustion is stopped (S405). On the other hand, when the external preheating release condition is not satisfied (NO), the process returns back to operation S401.

As described above, in the method of controlling the fluid heating apparatus 100 according to an embodiment disclosed herein, the heat exchanger 101 may be protected even when the small flow rate is used, durability may be improved, the external preheating function may be used, and the hot water having a constant temperature may be supplied to a user.

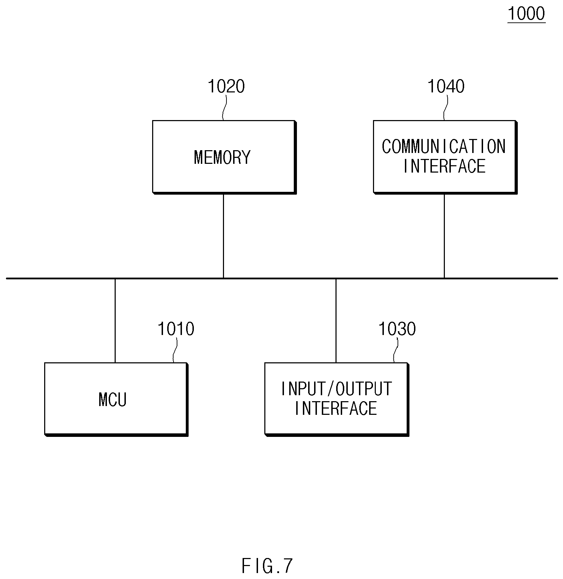

FIG. 7 is a block diagram illustrating a hardware configuration implementing the method of controlling a fluid heating apparatus according to an embodiment of the present invention.

Referring to FIG. 7, a computing system 1000 according to an embodiment disclosed herein may include a micro-controller unit (MCU) 1010, memory 1020, an input/output interface 1030, and a communication interface 1040.

The MCU 1010 may be a processor that executes programs (for example, a flow rate detection program, a temperature detection program, a heat amount control program, various pump and valve control programs, and the like) stored in the memory 1020, processes various pieces of data including the flow rate and the temperature of the heating apparatus through these programs and performs functions of components of the fluid heating apparatus 100 illustrated in FIG. 1.

The memory 1020 may store various programs related to flow rate detection, temperature sensing, control of various pumps and valves, and the like. Further, the memory 1020 may store various pieces of data such as a flow rate, a temperature or the like of the fluid circulating in the fluid heating apparatus 100.

A plurality of memories 1020 may be provided as needed. The memory 1020 may be a volatile memory or a non-volatile memory. A random access memory (RAM), a dynamic RAM (DRAM), a static RAM (SRAM), or the like may be used as the memory 1020 as a volatile memory. A read-only memory (ROM), a programmable ROM (PROM), an electrical alterable ROM (EAROM), an erasable and programmable ROM (EPROM), an electrically erasable and programmable ROM (EEPROM), a flash memory, and the like may be used as the memory 1020 as a non-volatile memory. Examples of the memories 1020 are merely examples and are not limited to these examples.

The input/output interface 1030 may provide an interface that connects an input device (not illustrated) such as a keyboard, a mouse, and a touch panel, an output device such as a display (not illustrated), and the MCU 1010, to transmit or receive data.

The communication interface 1040 is configured to transmit or receive various pieces of data to or from a server and may be various devices capable of supporting wired or wireless communication. For example, a program or various pieces of data for controlling components such as a pump and a valve may be transmitted or received to or from a separately provided external server through the communication interface 1040.

In this way, a computer program according to an embodiment disclosed herein may be recorded in the memory 1020, may be processed by the MCU 1010, and thus may be implemented as a module for performing, for example, respective functions illustrated in FIG. 1.

In a fluid heating apparatus according to an embodiment disclosed herein, hot water may be instantaneously used without installing an external hot water tank, and heat loss, an installation space, and installation cost may be reduced.

Further, in the fluid heating apparatus according to an embodiment disclosed herein, a heat exchanger may be protected even when a small flow rate is used, and thus durability may be improved, an internal/external preheating function may be used, and the hot water having a constant temperature may be supplied to a user.

## Claims

1. A fluid heating apparatus(100) comprising:
a burner(B);
a heat exchanger(101);
a first flow rate sensor(102) configured to detect a flow rate of a fluid supplied to the heat exchanger(101);
a second flow rate sensor configured to detect a flow rate of a circulation water;
a temperature sensor(104) configured to detect a temperature of a fluid discharged from the heat exchanger(101); and
a controller(120) configured to control a first pump(103) provided in an internal circulation flow path on the basis of the flow rate detected by the first flow rate sensor(102) to manage the flow rate of the fluid supplied to the heat exchanger(101) and configured to control an operation of the burner(B) on the basis of the temperature detected by the temperature sensor(104),
**characterized in that** the second flow rate sensor is provided between the first pump and the heat exchanger,
wherein the internal circulation flow path is formed along the heat exchanger, the temperature sensor, the first pump, and the second flow rate sensor,wherein the controller(120) is adapted to control the first pump(103) to increase the flow rate of the fluid supplied to the heat exchanger(101) when the flow rate detected by the first flow rate sensor(102) is less than or equal to a reference flow rate and when a set temperature of the fluid heating apparatus is greater than or equal to a reference temperature.

2. The fluid heating apparatus(100) of claim 1, wherein the controller(120) increases an amount of heat of the burner(B) when the temperature detected by the temperature sensor(104) is less than or equal to the set temperature.

3. The fluid heating apparatus(100) of claim 1, further comprising:
a flow rate adjustment valve(110) configured to adjust the flow rate of the fluid supplied from outside to the heat exchanger(101).

4. The fluid heating apparatus(100) of claim 1, further comprising:
a mixing valve(109) configured to mix the fluid supplied from outside to adjust the temperature of the fluid discharged from the heat exchanger(101).

5. The fluid heating apparatus(100) of claim 4, wherein the controller(120) controls opening or closing of the mixing valve(109) so that the temperature of the fluid discharged from the heat exchanger(101) corresponds to the temperature.

6. The fluid heating apparatus(100) of claim 1, wherein the controller(120) controls the first pump(103) when the fluid flowing through the internal circulation flow path satisfies a preset preheating condition.

7. The fluid heating apparatus(100) of claim 6, wherein the preset preheating condition includes a case in which the temperature detected by the temperature sensor(104) is less than or equal to a preheating reference temperature.

8. The fluid heating apparatus(100) of claim 7, wherein the controller(120) determines that the first pump(103) is abnormal when the first pump(103) is operated but the flow rate detected by the second flow rate sensor(108) is less than a threshold flow rate.

9. The fluid heating apparatus(100) of claim 3, further comprising:
a second pump(114) configured to recirculate, to the flow rate adjustment valve(110), the fluid delivered from the heat exchanger(101).

10. The fluid heating apparatus(100) of claim 9, wherein the controller(120) is adapted to control the burner(B) to perform a combustion operation when a temperature of a pipe connected between the flow rate adjustment valve(110) and the second pump(114) is less than or equal to a recirculation reference temperature.

## Patentansprüche

1. Fluidheizvorrichtung (100), umfassend:
einen Brenner (B);
einen Wärmetauscher (101);
einen ersten Durchflussratensensor (102), der so ausgelegt ist, dass er einen Durchfluss eines dem Wärmetauscher (101) zugeführten Fluids erfasst;
einen zweiten Durchflussratensensor, der dazu ausgelegt ist, einen Durchfluss eines Zirkulationswassers zu erfassen;
einen Temperatursensor (104), der dazu ausgelegt ist, eine Temperatur eines aus dem Wärmetauscher (101) abgegebenen Fluids zu erfassen; und
eine Steuerung (120), die dazu ausgelegt ist, eine in einem internen Zirkulationsströmungsweg vorgesehene erste Pumpe (103) auf der Grundlage der vom ersten Durchflussratensensor (102) erfassten Durchflussrate zu steuern, um die Durchflussrate des dem Wärmetauscher (101) zugeführten Fluids zu steuern, und die dazu ausgelegt ist, einen Betrieb des Brenners (B) auf der Grundlage der vom Temperatursensor (104) erfassten Temperatur zu steuern,
**dadurch gekennzeichnet, dass** der zweite Durchflussratensensor zwischen der ersten Pumpe und dem Wärmetauscher vorgesehen ist,
wobei der interne Zirkulationsströmungsweg entlang des Wärmetauschers, des Temperatursensors, der ersten Pumpe und des zweiten Durchflussratensensors gebildet ist, wobei die Steuerung (120) dazu ausgelegt ist, die erste Pumpe (103) so zu steuern, dass die Durchflussrate des dem Wärmetauscher (101) erhöht wird, wenn die vom ersten Durchflussratensensor (102) erfasste Durchflussrate kleiner oder gleich einer Referenzdurchflussrate ist und wenn eine Solltemperatur der Fluidheizvorrichtung größer oder gleich einer Referenztemperatur ist.

2. Die Fluidheizvorrichtung (100) nach Anspruch 1, wobei die Steuerung (120) eine Wärmemenge des Brenners (B) erhöht, wenn die vom Temperatursensor (104) erfasste Temperatur kleiner oder gleich der eingestellten Temperatur ist.

3. Fluidheizvorrichtung (100) nach Anspruch 1, ferner umfassend:
ein Durchflusssteuerventil (110), das so ausgelegt ist, dass es den Durchfluss des von außen dem Wärmetauscher (101) zugeführten Fluids einstellt.

4. Fluidheizvorrichtung (100) nach Anspruch 1, die ferner umfasst:
ein Mischventil (109), das so ausgelegt ist, dass es das von außen zugeführte Fluid mischt, um die Temperatur des aus dem Wärmetauscher (101) austretenden Fluids einzustellen.

5. Fluidheizvorrichtung (100) nach Anspruch 4, wobei die Steuereinheit (120) das Öffnen oder Schließen des Mischventils (109) so steuert, dass die Temperatur des aus dem Wärmetauscher (101) austretenden Fluids der Temperatur entspricht.

6. Fluidheizvorrichtung (100) nach Anspruch 1, wobei die Steuerung (120) die erste Pumpe (103) steuert, wenn das durch den internen Zirkulationsströmungsweg strömende Fluid eine voreingestellte Vorwärmbedingung erfüllt.

7. Fluidheizvorrichtung (100) nach Anspruch 6, wobei die voreingestellte Vorwärmbedingung einen Fall umfasst, in dem die vom Temperatursensor (104) erfasste Temperatur kleiner oder gleich einer Vorwärm-Referenztemperatur ist.

8. Fluidheizvorrichtung (100) nach Anspruch 7, wobei die Steuerung (120) feststellt, dass die erste Pumpe (103) eine Störung aufweist, wenn die erste Pumpe (103) in Betrieb ist, die vom zweiten Durchflussratensensor (108) erfasste Durchflussrate jedoch unter einer Schwellen-Durchflussrate liegt.

9. Fluidheizvorrichtung (100) nach Anspruch 3, ferner umfassend:
eine zweite Pumpe (114), die so ausgelegt ist, dass sie das vom Wärmetauscher (101) geförderte Fluid zum Durchflusssteuerventil (110) zurückführt.

10. Fluidheizvorrichtung (100) nach Anspruch 9, wobei die Steuerung (120) so ausgelegt ist, dass sie den Brenner (B) so steuert, dass dieser einen Verbrennungsvorgang durchführt, wenn eine Temperatur einer zwischen dem Durchflusssteuerventil (110) und der zweiten Pumpe (114) angeschlossenen Leitung kleiner oder gleich einer Rückführ-Referenztemperatur ist.

## Revendications

1. Appareil de chauffage de fluide (100) comprenant :
un brûleur (B);
un échangeur de chaleur (101);
un premier capteur de débit (102) configuré pour détecter le débit d'un fluide fourni à l'échangeur de chaleur (101);
un deuxième capteur de débit configuré pour détecter le débit d'une eau de circulation ;
un capteur de température (104) configuré pour détecter la température d'un fluide évacué de l'échangeur de chaleur (101) ; et
un contrôleur (120) configuré pour commander une première pompe (103) prévue dans un circuit de circulation interne sur la base du débit détecté par le premier capteur de débit (102) afin de réguler le débit du fluide fourni à l'échangeur de chaleur (101), et configuré pour commander le fonctionnement du brûleur (B) sur la base de la température détectée par le capteur de température (104),
**caractérisé en ce que** le deuxième capteur de débit est disposé entre la première pompe et l'échangeur de chaleur,
le circuit de circulation interne s'étendant le long de l'échangeur de chaleur, du capteur de température, de la première pompe et du deuxième capteur de débit,le contrôleur (120) étant adapté pour commander la première pompe (103) de manière à augmenter le débit du fluide fourni à l'échangeur de chaleur (101) lorsque le débit détecté par le premier capteur de débit (102) est inférieur ou égal à un débit de référence et lorsque la température de consigne de l'appareil de chauffage de fluide est supérieure ou égale à une température de référence.

2. Appareil de chauffage de fluide (100) selon la revendication 1, dans lequel le contrôleur (120) augmente la quantité de chaleur du brûleur (B) lorsque la température détectée par le capteur de température (104) est inférieure ou égale à la température de consigne.

3. Appareil de chauffage de fluide (100) selon la revendication 1, comprenant en outre:
une vanne de réglage de débit (110) configurée pour régler le débit du fluide fourni depuis l'extérieur à l'échangeur de chaleur (101).

4. Appareil de chauffage de fluide (100) selon la revendication 1, comprenant en outre:
une vanne de mélange (109) configurée pour mélanger le fluide fourni depuis l'extérieur afin de régler la température du fluide évacué de l'échangeur de chaleur (101).

5. Appareil de chauffage de fluide (100) selon la revendication 4, dans lequel le contrôleur (120) commande l'ouverture ou la fermeture de la vanne de mélange (109) de telle sorte que la température du fluide évacué de l'échangeur de chaleur (101) corresponde à la température.

6. Appareil de chauffage de fluide (100) selon la revendication 1, dans lequel le contrôleur (120) commande la première pompe (103) lorsque le fluide s'écoulant à travers le circuit de circulation interne satisfait à une condition de préchauffage prédéfinie.

7. Appareil de chauffage de fluide (100) selon la revendication 6, dans lequel la condition de préchauffage prédéfinie comprend un cas dans lequel la température détectée par le capteur de température (104) est inférieure ou égale à une température de référence de préchauffage.

8. Appareil de chauffage de fluide (100) selon la revendication 7, dans lequel le contrôleur (120) détermine que la première pompe (103) présente un dysfonctionnement lorsque la première pompe (103) est en fonctionnement mais que le débit détecté par le deuxième capteur de débit (108) est inférieur à un seuil de débit.

9. Appareil de chauffage de fluide (100) selon la revendication 3, comprenant en outre:
une deuxième pompe (114) configurée pour renvoyer, vers la vanne de réglage de débit (110), le fluide délivré par l'échangeur de chaleur (101).

10. Appareil de chauffage de fluide (100) selon la revendication 9, dans lequel le contrôleur (120) est adapté pour commander le brûleur (B) afin qu'il effectue une opération de combustion lorsque la température d'un tuyau relié entre la vanne de réglage de débit (110) et la deuxième pompe (114) est inférieure ou égale à une température de référence de recirculation.
